# EUROPEAN PATENT SPECIFICATION

(11) **EP 0 823 572 B1**
(45) Date of publication and mention of the grant of the patent: **28.11.2001**
(21) Application number: 97306045.2
(22) Date of filing: 08.08.1997
(51) Int. Cl.: F16H 59/10, F16H 61/22

(54) **Steering column automatic transmission shift lever device**
Lenkradschalthebel-Vorrichtung für automatisches Getriebe
Dispositif de levier de commande d'une transmission automatique fixé sur une colonne de direction

(30) Priority: 09.08.1996 JP 21089796
(43) Date of publication of application: 11.02.1998
(73) Proprietor: Mannoh Kogyo Co., Ltd., Imahonmachi, 4-chome, 14-ban, 24-gou (JP)
(72) Inventor: Tazai, Akira, Aichi-ken, Aichi-gun, Tougou-cho (JP)
(74) Representative: Paget, Hugh Charles Edward

(56) References cited:
- JP-A- 7 151 224
- US-A- 4 934 209
- US-A- 4 936 431
- US-A- 5 050 411

## Description

### BACKGROUND OF THE INVENTION

### 1. Field of the invention

The present invention relates to an automotive column automatic transmission (AT) shift lever device and, more particularly, to a type of column AT shift lever device for performing a select operation using a select button provided in a shift knob, and to a vehicle having such a shift lever device.

### 2. Description of the Related Art

A column AT shift lever device is a device wherein a shift lever is mounted near a column shaft. In a widely employed construction, at the time of a shift operation, for example, from the parking position to the drive position or the like, a select button provided in a shift knob is pressed so that the engagement between a detent plate and a detent member is released by operation of a select rod or a select cable, thereby allowing the shift operation.

However, a conventional detent plate incorporated in such a column AT shift lever device (see for instance US-A-4 936 431) has an projection-recess detent pattern on its cylindrical surface that is coaxial with the rotating axis of the shift lever. Therefore, a detent plate is not easy to process. In particular, if the radius of curvature of the cylindrical surface is reduced for a size reduction of the device, it becomes difficult to achieve high dimensional precision. There arises a problem in that an error in the dimensional precision of the detent plate leads to an error in the position of a shift cable assumed corresponding to each position of the shift lever.

Another shift lever device is found in US-A-5 566 583, disclosing all features of the preamble of claim 1.

### SUMMARY OF THE INVENTION

Accordingly, it is an object of the present invention to provide a column AT shift lever wherein a detent plate is easy to process even if the device is reduced in size so that an error will not be caused in the position of a shift cable.

According to the present invention, there is provided a column AT shift lever device as set out in claim 1.

The shift lever assembly may have a shift lever and a shaft fixed to a base portion of the shift lever, the shaft being rotatably supported by the retainer.

The column AT shift lever device may further have a construction wherein a control lever is provided protruding from the shaft, and a shift cable for an automatic transmission is connected to an end of the control lever.

The select plate may be swingable by operation of a select cable. Further, the select cable may extend through an interior of a shift lever and connect the select plate and a select button provided in a knob.

The column AT shift lever device may further have a construction wherein the select plate is swingable by depressing the select button and thereby pulling the select cable, and wherein a main return spring is provided for returning the select plate to a previous position when the select button is released from depression.

The detent plate may have grooves generally in a projection-recess pattern.

The column AT shift lever device may further have a construction wherein an end of the select plate is engageable with the detent plate, and wherein a shift lock plate is provided on an outer surface of the retainer, for restricting movement of the select plate in cooperation of at least one of braking operation and key operation.

### BRIEF DESCRIPTION OF THE DRAWINGS

The foregoing and further objects, features and advantages of the present invention will become apparent from the following description of a preferred embodiment with reference to the accompanying drawings, wherein like numerals are used to represent like elements and wherein:
Fig. 1 shows an elevation of an entire column AT shift lever device according to a preferred embodiment of the present invention;

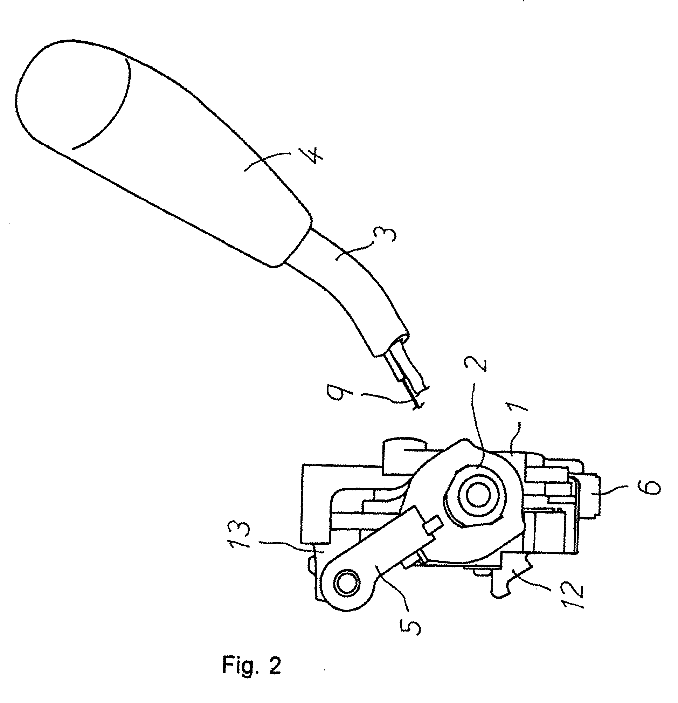

Fig. 2 is a left side view of the column AT shift device shown in Fig. 1;
Fig. 3 is an enlarged sectional view of the column AT shift device taken on plane A-A of Fig. 1;
Fig. 4 is a central longitudinal sectional view of portions of the column AT shift device a state where the select button is released;
Fig. 5 is a central longitudinal sectional view of portions of the column AT shift device in a state where the select button is depressed;
Fig. 6 is a side view of the column AT shift device illustrating the relationship between a shift lever and a control lever;
Fig. 7 is a rear view of portions of the column AT shift device shown in Fig. 1;
Fig. 8 illustrates the relationship between a brake pedal and a shift lock plate; and
Fig. 9 illustrates the relationship between a key cylinder and the shift lock plate.

### DETAILED DESCRIPTION OF PREFERRED EMBODIMENT

A preferred embodiment of the present invention will be described in detail hereinafter with reference to the accompanying drawings.

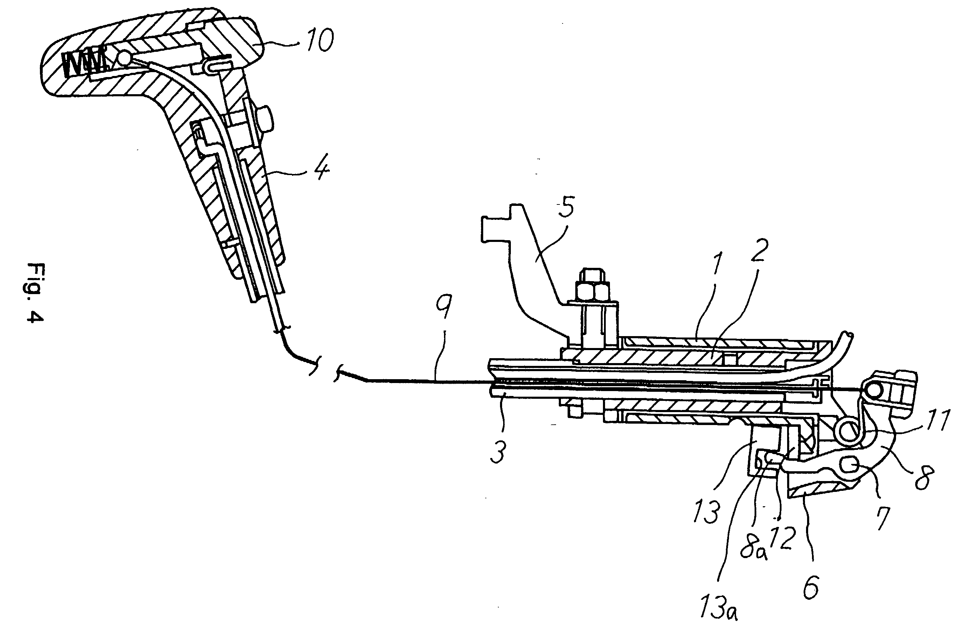

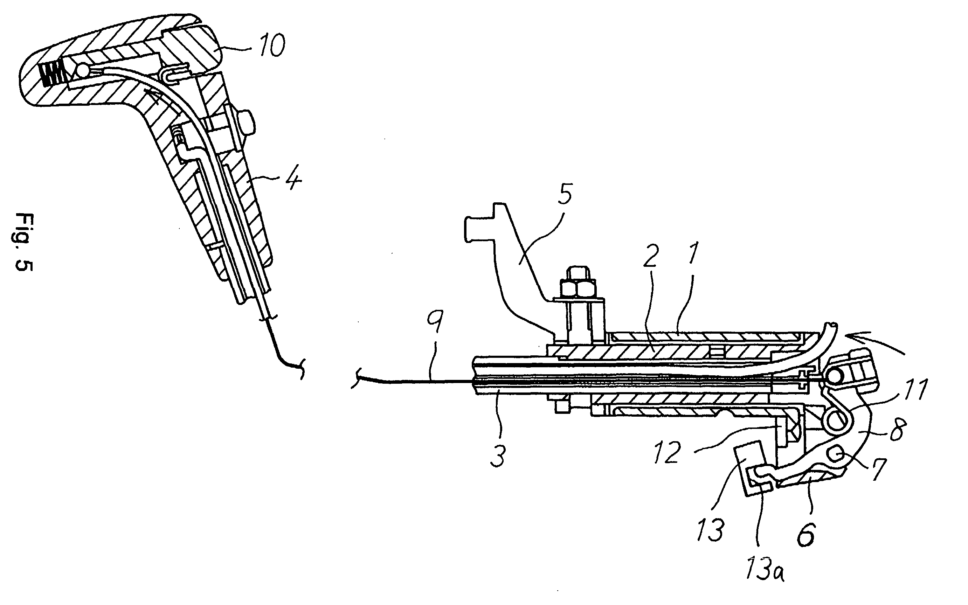

Referring to Figs, 1 through 5, a column AT shift lever device according to this embodiment has a retainer 1 for fixing the column AT shift lever device to a column shaft or the like, and a shaft 2 rotatably supported inside the retainer 1. A hollow shift lever 3 has a knob 4 provided on a distal end thereof. A base portion of the shift lever 3 has a non-circular sectional shape and is fixed to a substantially central portion of the shaft 2 so that the shift lever 3 cannot be rotated relative to the shaft 2, as indicated in Figs. 4 and 5.

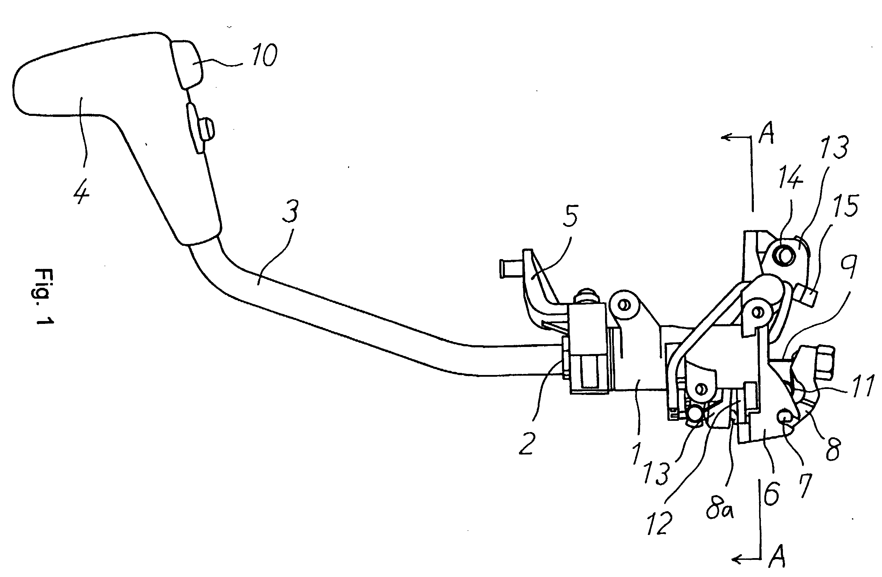

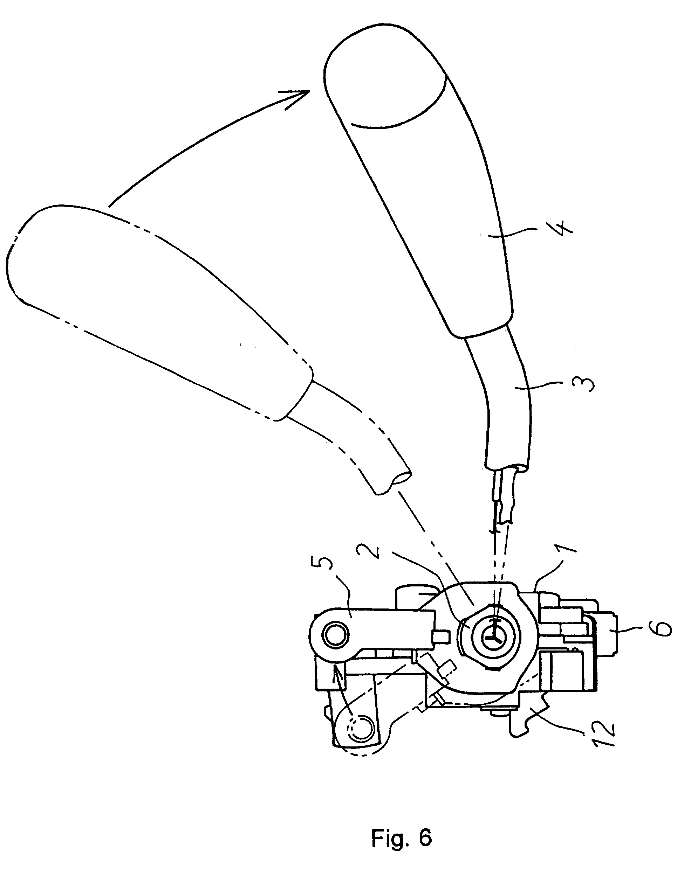

A control lever 5 is projected from an end portion of the shaft 2, the end portion being located on a left side thereof in Figs. 1, 4 and 5. A shift cable (not shown) is connected to a distal end of the control lever 5. Therefore, when the shift lever 3 is operated as indicated in Fig. 6, the shaft 2 turns inside the retainer 1 and, simultaneously, the control lever 5 swings, thereby operating an automatic transmission (not shown).

A right-side (in Figs. 1, 4 and 5) end portion of the shaft 2 is firmly connected to or formed together with a flat platy portion 6 as shown in Figs. 4 and 5. The flat platy portion 6 is projected in the direction of a radius of the shaft 2. A select plate 8 is pivoted by a pivot shaft 7 provided in the flat platy portion 6. Fixed to an end portion of the select plate 8 is a select cable 9 extending through an interior of the shift lever 3. When a select button 10 of the knob 4 is depressed to pull the select cable 9, the select plate 8 swings in a plane that includes the rotating axis of the shaft 2, as indicated in Fig. 5. A main return spring 11 returns the select cable 9 and the select plate 8 to a position indicated in Fig. 4 when the select button 10 is released from the depression.

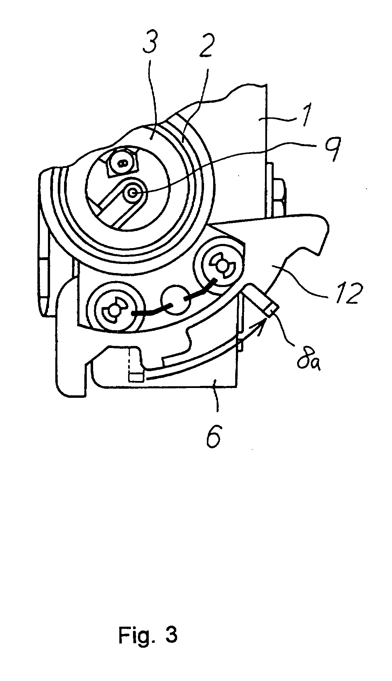

Outside the retainer 1, a flat plate detent plate 12 substantially perpendicular to the rotating axis of the shaft 2 is mounted facing an outer end portion of the select plate 8. The detent plate 12 has projection-recess grooves (detent pattern) as shown in Fig. 3. An end portion 8a of the select plate 8 is always engaged with one of the grooves of the detent plate 12 by operation of the aforementioned main return spring 11.

In the thus-constructed column AT shift lever device, when the shift lever 3 is operated, the shaft 2 turns inside the retainer 1, and the control lever 5 integrally fixed to the shaft 2 also swings, thereby operating the automatic transmission, as described above. If it is desired to shift the shift lever 3, for example, from the parking position to another position, the select button 10 of the knob 4 is depressed to pull the select cable 9. Thereby, the select plate 8 swings about the pivot shaft 7 in the plane that includes the rotating axis of the shaft 2, so that the end portion 8a of the select plate 8 becomes released from a groove of the detent plate 12 as shown in Fig. 5. Thus it becomes possible to shift the shift lever 3 to another position.

As can be understood from the above description, since the device according to this embodiment of the present invention, is constructed wherein the select plate 8 is caused to swing in the plane that includes the rotating axis of the shaft 2 so as to engage with and disengage from the flat detent plate 12 substantially perpendicular to the rotating axis of the shaft 2, the detent plate 12 can be provided in a simple shape formed by die-cutting a flat plate. Therefore, it becomes easy to produce an accurate shape compared with a conventional detent plate wherein a projection-recess detent pattern is formed on its cylindrical surface. Furthermore, the errors in the position of the shift cable corresponding to each shift position is accordingly eliminated, thereby achieving another advantage that the adjustment of the length of the shift cable after assembly becomes unnecessary.

A shift lock mechanism preferably incorporated into the column AT shift lever device according to the present invention will be described. The shift lock mechanism is a mechanism wherein if a key is turned from the LOCK position to the ACC position and the brake pedal is left undepressed, the shift lever 3 is not allowed to be moved from the parking position to any other position, and if the shift lever 3 is not returned to the parking position, the key is not allowed to be turned to the LOCK position.

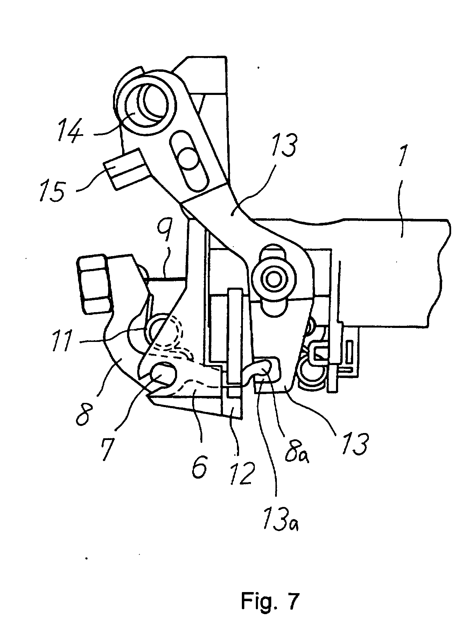

To realize the shift lock, a shift lock plate 13 is provided on a reverse surface of the retainer 1 as shown in Fig. 7. A lower end of the shift lock plate 13 extends to a position adjacent to the detent plate 12, and the end portion 8a of the select plate 8 fits into a recess 13a of the shift lock plate 13. Since the shift lock plate 13 is slidable in a free state during driving, the swinging of the select plate 8 is not prevented.

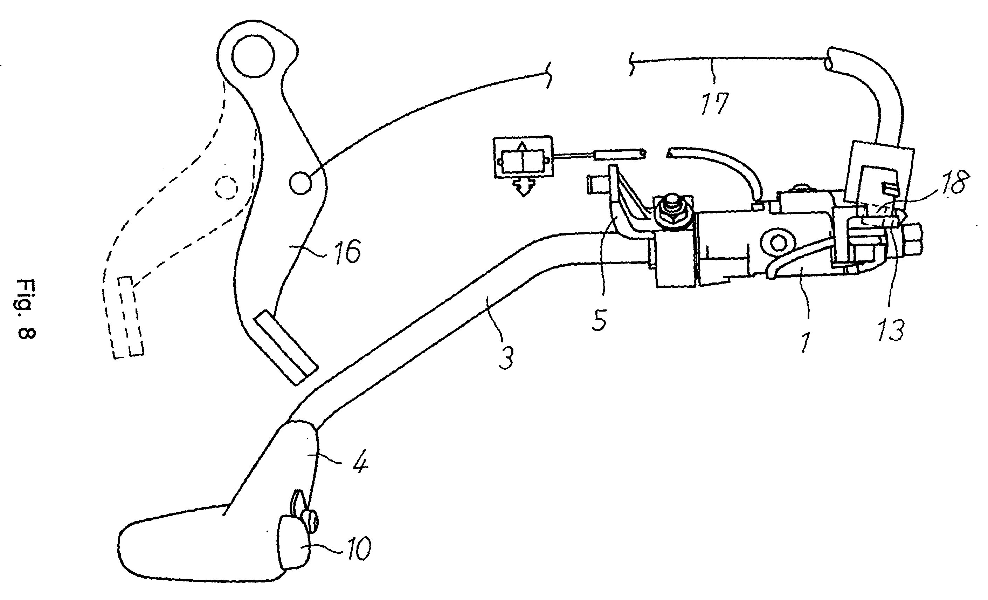

The shift lock plate 13 has, in an upper portion thereof, a pin insert hole 14 and a key engaging projection 15. As shown in Fig. 8, a shift lock pin 18 connected to an end of a shift lock cable 17 connected to a brake pedal 16 is inserted into the pin insert hole 14. In a parking state, the shift lock pin 18 is inserted into the pin insert hole 14 while the shift lock plate 13 is raised upward, thereby locking the shift lock plate 13. The shift lock plate 13 does not become a free state unless the brake pedal 16 is depressed to pull the shift lock pin 18 out of the pin insert hole 14.

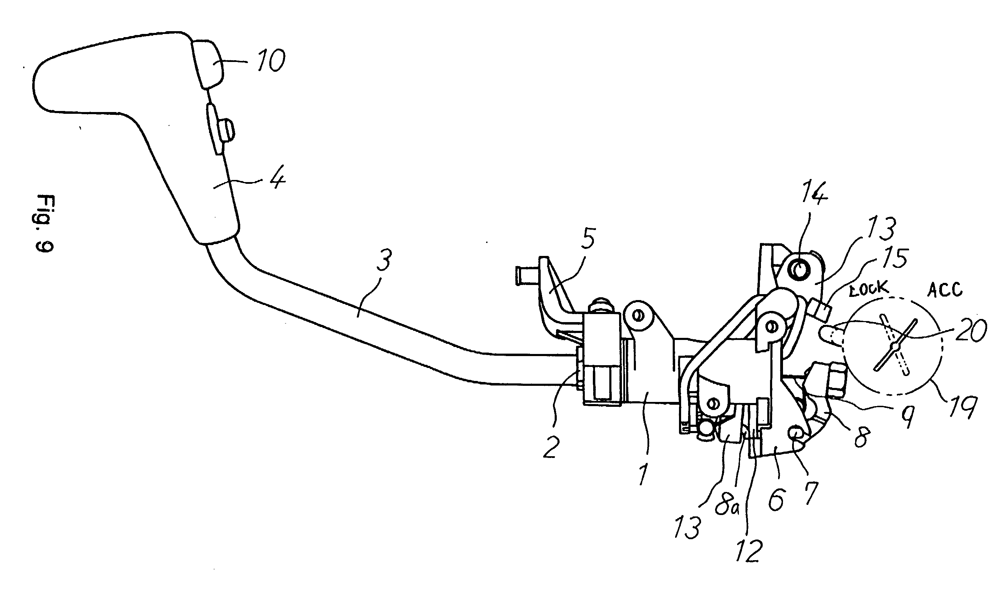

The key engaging projection 15 of the shift lock plate 13 engages with a lock pin 20 of a key cylinder 19 when the key is in the LOCK, as shown in Fig. 9, thereby locking the shift lock plate 13 while the shift lock plate 13 is raised upward. Therefore, the shift lock plate 13 does not become the free state unless the key is turned to the ACC.

In the thus-constructed shift lock mechanism, when the shift lever device is in the parking state, the key engaging projection 15 of the shift lock plate 13 is engaged with the lock pin 20 of the key cylinder 19 and, at the same time, the shift lock pin 18 is inserted into the pin insert hole 14, thus achieving double locking of the shift lock plate 13. Therefore, even if depression of the select button 10 of the knob 4 is attempted to move the select plate 8, the select plate 8 cannot be moved since the shift lock plate 13 into which the end portion 8a of the select plate 8 is fitted is locked. In this case, therefore, the shift lever 3 cannot be shifted from the parking position to any other position.

For starting, the key is first turned to the ACC position to withdraw the lock pin 20 of the key cylinder 19, thereby releasing the lock pin 20 from the engagement with the key engaging projection 15 of the shift lock plate 13. When the brake pedal 21 is then depressed to pull the shift lock pin 18 from the pin insert hole 14, the shift lock plate 13 becomes the free state. Therefore, it becomes possible to move the select plate 8 by depressing the select button 10 of the knob 4 and shift the shift lever 3 from the parking position to a drive position or the like.

When the shift lever 3 is returned to the parking position at the time of parking, the shift lock plate 13 is pushed up to the position indicated in Fig. 9 by the end portion 8a of the select plate 8. When the brake pedal 16 is subsequently released, the shift lock pin 18 is inserted into the pin insert hole 14, thus establishing a state where the key can be turned to the LOCK position. If the shift lever 3 is not returned to the parking position, the key is prevented from being turned to the LOCK position since the lock pin 20 of the key cylinder 19 will hit and be stopped by the key engaging projection 15 of the shift lock plate 13 being in a position lower than the position indicated in Fig. 9.

As understood from the above description, the column AT shift lever device of the present invention is able to perform functions as in the conventional art, by using the flat detent plate, and makes it easier to process a detent plate with a high precision even if the device is reduced in size. Therefore, the errors in the position of the shift cable assumed corresponding to each shift position of the shift lever are accordingly eliminated, thereby achieving an advantage that the length adjustment of the shift cable after assembly becomes unnecessary, besides other advantages.

The invention also consists in a vehicle, e.g. a car, having the column AT shift lever mounted in it.

## Claims

1. A column automatic transmission (AT) shift lever device comprising:
a shift lever assembly (2, 3, 4) rotatably supported by a retainer (1);
a select plate (8) mounted on the shift lever assembly; and
a generally flat detent plate (12) engaged by the select plate (8) and disposed in a location facing an end portion of the select plate (8), the detent plate (12) being substantially perpendicular to the rotation axis of the shift lever assembly,
**characterised in that**
the select plate (8) is pivoted to an end portion of the shift lever assembly, the select plate being capable of being swung in a plane that includes the rotation axis of the shift lever assembly.

2. A column AT shift lever device according to claim 1, wherein the shift lever assembly comprises a shift lever (3) and a shaft (2) fixed to a base portion of the shift lever, the shaft (2) being rotatably supported by the retainer (1).

3. A column AT shift lever device according to claim 2, wherein a control lever (5) is provided protruding from the shaft (2), and a shift cable for an automatic transmission is connected to an end of the control lever.

4. A column AT shift lever device according to any one of claims 1 to 3, wherein the select plate (8) is swingable by operation of a select cable (9).

5. A column AT shift lever device according to claim 4, wherein the shift lever assembly includes a shift lever (3) and an operating knob (4), and the select cable (9) extends through the interior of a shift lever (3) and connects the select plate with a select button (10) provided in the knob (4).

6. A column AT shift lever device according to claim 5, wherein the select plate (8) is swingable by depressing the select button (10) and thereby pulling the select cable, and wherein a main return spring is provided for returning the select plate (8) to a previous position when the select button (10) is released from depression.

7. A column AT shift lever device according to any one of claims 1 to 6, wherein the detent plate (8) has grooves generally in a projection-recess pattern.

8. A column AT shift lever device according to any one of claims 1 to 7, wherein an end of the select plate (8) is engageable with the detent plate (12), and wherein a shift lock plate (13) is provided on an outer surface of the retainer, for restricting movement of the select plate in cooperation of at least one of braking operation and key operation.

9. A vehicle having a column AT shift lever device according to any one of claims 1 to 8.

## Patentansprüche

1. Lenkradsäulen-Automatikgetriebe-Schalthebelvorrichtung, umfassend:
eine Schalthebelanordnung (2, 3, 4), die drehbar von einem Rückhalter (1) gehalten wird;
eine Auswählplatte (8), die auf der Schalthebelanordnung montiert ist; und
eine allgemein ebene Anschlagplatte (12), die sich mit der Auswählplatte (8) in Eingriff befindet und in einer solchen Position angeordnet ist, dass sie einem Endabschnitt der Auswählplatte (8) zugewandt ist, wobei die Anschlagplatte (12) im Wesentlichen senkrecht zur Rotationsachse der Schalthebelanordnung steht;
**dadurch gekennzeichnet, dass**
die Auswählplatte (8) zu einem Endabschnitt der Schalthebelanordnung hin geschwenkt ist, wobei die Auswählplatte in einer Ebene geschwenkt werden kann, die die Rotationsachse der Schalthebelanordnung umfasst.

2. Lenkradsäulen-Automatikgetriebe-Schalthebelvorrichtung nach Anspruch 1, worin die Schalthebelanordnung einen Schalthebel (3) und eine Welle (2) umfasst, die an einem Basisabschnitt des Schalthebels befestigt ist, wobei die Welle (2) drehbar von dem Rückhalter (1) gehalten wird.

3. Lenkradsäulen-Automatikgetriebe-Schalthebelvorrichtung nach Anspruch 2, worin ein Steuerhebel (5) vorgesehen ist, der aus der Welle (2) vorragt, und ein Schaltseil für ein Automatikgetriebe mit einem Ende des Steuerhebels verbunden ist.

4. Lenkradsäulen-Automatikgetriebe-Schalthebelvorrichtung nach einem der Ansprüche 1 bis 3, worin die Auswählplatte (8) durch die Betätigung eines Auswählseils (9) geschwenkt werden kann.

5. Lenkradsäulen-Automatikgetriebe-Schalthebelvorrichtung nach Anspruch 4, worin die Schalthebelanordnung einen Schalthebel (3) und einen Betätigungsknauf (4) umfasst und sich das Auswählseil (9) durch das Innere des Schalthebels (3) erstreckt und die Auswählplatte mit einem Auswählknopf (10) verbindet, der im Knauf (4) vorgesehen ist.

6. Lenkradsäulen-Automatikgetriebe-Schalthebelvorrichtung nach Anspruch 5, worin die Auswählplatte (8) durch Niederdrücken des Auswählknopfs (10) und dadurch bedingtes Ziehen des Auswählseils geschwenkt werden kann und worin eine Hauptrückstellfeder vorgesehen ist, um die Auswählplatte (8) in eine vorherige Position zurückzustellen, wenn der Auswählknopf (10) aus dem Niederdrücken freigelassen wird.

7. Lenkradsäulen-Automatikgetriebe-Schalthebelvorrichtung nach einem der Ansprüche 1 bis 6, worin die Anschlagplatte (8) Nuten aufweist, die allgemein ein Vorsprungs-Ausnehmungs-Muster aufweisen.

8. Lenkradsäulen-Automatikgetriebe-Schalthebelvorrichtung nach einem der Ansprüche 1 bis 7, worin ein Ende der Auswählplatte (8) mit der Anschlagplatte (12) in Eingriff gebracht werden kann und worin eine Schaltarretierplatte (13) an einer Außenfläche des Rückhalters vorgesehen ist, um Bewegung der Auswählplatte in Zusammenwirkung mit zumindest einem aus einer Bremsenbetätigung und einer Schlüsselbetätigung einzuschränken.

9. Fahrzeug mit einer Lenkradsäulen-Automatikgetriebe-Schalthebelvorrichtung nach einem der Ansprüche 1 bis 8.

## Revendications

1. Dispositif de levier de commande de transmission automatique (AT) d'une colonne de direction comprenant :
un ensemble de levier de commande (2, 3, 4) supporté d'une manière rotative par un organe de retenue (1) ;
un plateau de sélection (8) monté sur l'ensemble de levier de commande ; et
un plateau de positionnement généralement plat (12) avec lequel vient en prise le plateau de sélection (8) et disposé dans un emplacement orienté vers une portion d'extrémité du plateau de sélection (8), le plateau de positionnement (12) étant sensiblement perpendiculaire à l'axe de rotation de l'ensemble de levier de commande ;
**caractérisé en ce que** le plateau de sélection (8) est amené à pivoter à une portion d'extrémité de l'ensemble de levier de commande, le plateau de sélection étant apte à être pivoté dans un plan qui comprend l'axe de rotation de l'ensemble de levier de commande.

2. Dispositif de levier de commande d'une transmission automatique de colonne de direction selon la revendication 1, où l'ensemble de levier de commande comprend un levier de commande (3) et un arbre (2) fixé à une portion de base du levier de commande, l'arbre (2) étant supporté en rotation par l'organe de retenue (1).

3. Dispositif de levier de commande d'une transmission automatique de colonne de direction selon la revendication 2, où un levier de commande (5) est réalisé pour faire saillie de l'arbre (2), et un câble de commande pour une transmission automatique est relié à une extrémité du levier de commande.

4. Dispositif de levier de commande d'une transmission automatique de colonne de direction selon l'une des revendications 1 à 3, où le plateau de sélection (8) peut être amené à pivoter par l'actionnement d'un câble de sélection (9).

5. Dispositif de levier de commande d'une transmission automatique de colonne de direction selon la revendication 4, où l'ensemble de levier de commande comprend un levier de commande (3) et une poignée d'actionnement (4), et le câble de sélection (9) s'étend à travers l'intérieur d'un levier de commande (3) et relie le plateau de sélection à un bouton de sélection (10) prévu dans la poignée (4).

6. Dispositif de levier de commande d'une transmission automatique de colonne de direction selon la revendication 5, où le plateau de sélection (8) peut être amené à pivoter en enfonçant le bouton de sélection (10) et en exerçant ainsi une traction sur le câble de sélection, et où un ressort de rappel principal est prévu pour ramener le plateau de sélection (8) à une position antérieure lorsque le bouton de sélection (10) est relâché de son état enfoncé.

7. Dispositif de levier de commande d'une transmission automatique de colonne de direction selon l'une des revendications 1 à 6, où le plateau de positionnement (8) présente des rainures généralement selon un motif saillie-évidement.

8. Dispositif de levier de commande d'une transmission automatique de colonne de direction selon l'une des revendications 1 à 7, où une extrémité du plateau de sélection (8) peut être mise en prise avec le plateau de positionnement (12), et où un plateau de verrouillage de commande (13) est prévu sur une surface extérieure de l'organe de retenue pour limiter le déplacement du plateau de sélection en coopération avec au moins une opération de freinage et une opération de clé.

9. Véhicule possédant un dispositif de levier de commande d'une transmission automatique fixé sur une colonne de direction selon l'une des revendications 1 à 8.
